# EUROPEAN PATENT APPLICATION

(11) **EP 1 381 032 A1**
(43) Date of publication of application: **14.01.2004**
(21) Application number: 03015395.1
(22) Date of filing: 08.07.2003
(51) Int. Cl.: G11B 5/702

(54) **Magnetic recording medium**

(30) Priority: 10.07.2002 JP 2002201294
(71) Applicant: SONY CORPORATION, Tokyo (JP)
(72) Inventor: Kato, Atsushi, Shinagawa-ku, Tokyo (JP)
(74) Representative: Müller - Hoffmann & Partner

(57) **Abstract**

A magnetic recording medium excellent in the strength of the magnetic layer; dispersibility; surface smoothness and electromagnetic conversion characteristics of the magnetic layer; and durability under special conditions is disclosed. A magnetic recording medium of the present invention is such as being obtained by coating, on a non-magnetic support, a magnetic coating material having a magnetic powder and a binder dispersed in a solvent, wherein the binder contains two kinds of polyurethane resins such as an aromatic polyester polyurethane resin obtained by urethanization of an aromatic polyester with an aromatic diisocyanate; and a polyurethane resin obtained by urethanization of a glycol having a molecular weight of 60 to 250 with an aromatic diisocyanate under a condition ensuring a urethane group concentration of 3.0 mmol/g or above.

## Description

### CROSS REFERENCES TO RELATED APPLICATIONS

The present invention claims priority to its priority document No. 2002-201294 filed in the Japanese Patent Office on July 10, 2002, the entire contents of which being incorporated by reference herein.

### BACKGROUND OF THE INVENTION

### 1. Field of the Invention

The present invention relates to a magnetic recording medium.

### 2. Description of Related Art

Recent advancement in performance of hi-vision VTRs or digital VTRs demands more advanced performance also for magnetic recording media used therewith.

In particular in pursuit of larger recording density and larger capacity, recording wavelength has become shorter, and thus the magnetic powder used therefor has been discussed for further reduction in the particle size. As one important technology holding the key for dispersing the advanced and pulverized magnetic powder, development of a binder resin for the magnetic recording media, which is excellent both in dispersibility and durability, is strongly expected.

Binder resins generally used for the conventional magnetic recording media include vinyl chloride-base copolymer, polyurethane resin, cellulose resin (Japanese Laid-Open Patent Publication No. 7-176035), phenoxy resin, and polyacetal resin (Japanese Laid-Open Patent Publication No. 7-192251), all of these may be used individually or in any combinations.

Among these resins, polyurethane resin has extensively been investigated because it has a broad range of physical characteristics, and allows introduction of various functional groups.

For example, Japanese Laid-Open Patent Publication No. 7-235044 discloses that excellent electromagnetic conversion characteristics were obtained by using a polyurethane resin having a tertiary amine as a polar group.

Considering recent trends in smaller particle size of the magnetic powder to be used, there are additional requirements for lower viscosity and larger dispersibility under high solid contents. In this regard, Japanese Laid-Open Patent Publication Nos. 3-190983 and 3-203811 disclose methods using polyurethane resins having specific compositions having alkyl phosphine groups introduced therein.

Japanese Laid-Open Patent Publication No. 7-50010 discloses a urethane urea using a specific amine, as a binder effective to improve the dispersibility.

Besides the durability which should be considered for a case where the magnetic recording medium is repetitively used for recording and reproduction on a VTR, it is known that the durability would vary in some applications in which only unused tapes are always subjected to recording in a continuous manner, such as for a case where a video software is copied into a large number of new tapes. It is also known that a condition under which only unused tapes are always subjected to into recording and reproduction in a continuous manner becomes severer. This is possibly because the adhered matters on the surface of the magnetic recording media are likely to deposit on the heads.

Similarly to the above, higher durability is also required for video-tapes such as being used on camcorders for broadcasting use or so, because it is a general practice to use separate VTRs for collection of news materials and for editing, and this again results in that only unused tapes are always used in a continuous manner.

Generally, to improve the durability, it is beneficial to increase the amount of head wear by adjusting types and particle size of abrasives, but this disadvantageously shorten the service life of the head since the head are more likely to be worn. The increase in the amount of abrasives also adversely affects the electromagnetic conversion characteristics due to degraded magnetic characteristics and worsened surface roughness.

None of ever-examined binders has been successful in satisfying the durability under the above-described special conditions. Even changes in the types or additional amounts of the abrasives so as to modify abrasive force of the magnetic recording media often resulted in an insufficient effect when considering a balance with the electromagnetic conversion characteristics.

It is therefore necessary to improve the durability of the magnetic recording media through raising strength of the coated film *per se* without relying upon addition of the abrasives, and to develop compositions of the magnetic recording media which can retain a large strength of the coated film.

In another aspect, in order to reduce impact on the environment, investigations have been directed to composition of the magnetic recording medium disusing vinyl chloride-base resins which have generally been used. The vinyl chloride-base resins are disadvantageous in that they may emit hydrogen chloride during the incineration so as to corrode an incinerator, and that they are assumed as a dioxin-generating source. It is therefore strongly expected to obtain a binder for use in the magnetic recording media, which is excellent in the dispersibility and durability, and is substitutive to the vinyl chloride-base resin.

### SUMMARY OF THE INVENTION

The present invention is therefore to provide a coating-type magnetic recording medium which is excellent in strength of the magnetic layer, dispersibility, surface smoothness and electromagnetic conversion characteristics of the magnetic layer, and durability under special conditions of use.

That is, the present invention relates to a magnetic recording medium obtained by coating, on a non-magnetic support, a magnetic coating material having a magnetic powder and a binder dispersed in a solvent, wherein the binder contains two kinds of polyurethane resins such as:
an aromatic polyester polyurethane resin obtained by urethanization of an aromatic polyester with an aromatic diisocyanate; and
a polyurethane resin obtained by urethanization of a glycol having a molecular weight of 60 to 250 with an aromatic diisocyanate under a condition ensuring a urethane group concentration of 3.0 mmol/g or above (referred to as a first magnetic recording medium of the present invention, hereinafter).

The present invention relates also to a magnetic recording medium obtained by coating, on a non-magnetic support, a magnetic coating material having a magnetic powder and a binder dispersed in a solvent, wherein the binder contains two kinds of polyurethane resins such as:
an aromatic polyester polyurethane resin obtained by urethanization of an aromatic polyester with an aromatic diisocyanate; and
a polyurethane urea resin obtained by urethanization of a glycol having a molecular weight of 60 to 250, amino alcohol and diamine with an aromatic diisocyanate under a condition ensuring a total concentration of urethane group and urea group of 3.0 mmol/g or above (referred to as a second magnetic recording medium of the present invention, hereinafter).

Because the first and second magnetic recording media use, as a part of the binder thereof, the polyurethane resin having a urethane group concentration of 3.0 mmol/g or above, or the polyurethane urea resin having a total concentration of urethane group and urea group of 3.0 mmol/g or above, the magnetic coated film will have a raised strength and desirable durability without paying attention to types and particle size of the abrasive to be added to the magnetic recording media.

Because the binder uses the polyurethane resin or polyurethane urea resin in combination with the polyurethane resin containing the same aromatic polyester, the binder resins will have a desirable compatibility with each other, and the magnetic recording media consequently have excellent electromagnetic conversion characteristics and durability.

That is, because the binder is based on the combined use of resins both having aromatic benzene ring skeletons but having no long-chained and strongly-hydrophobic alkyl groups, compatibility between the binders is improved to a large extent, and this consequently improves dispersibility of the magnetic coating material to thereby achieve excellent electromagnetic conversion characteristics. This also smoothens the surface of the magnetic layer, and thus improves the durability.

The binder is also advantageous in that it does not use any halogen-containing resins such as generally-used vinyl chloride-base copolymer, and thus can provide magnetic recording media largely respectful to the global environment.

The present invention also relates to a magnetic recording medium obtained by coating, on a non-magnetic support, a magnetic coating material having a magnetic powder and a binder dispersed in a solvent, wherein the binder contains a polyurethane resin which comprises water, glycol and triol having a molecular weight of 60 to 250, diamine, amino alcohol and diisocyanate, and has an OH value of 0.5 to 1.0 mmol/g (referred to as a third magnetic recording medium of the present invention, hereinafter).

Because the binder used for the third magnetic recording medium of the present invention contains the polyurethane resin having a large amount of active hydroxyl groups introduced therein, the magnetic coated film will have a raised strength and desirable durability without paying attention to types and particle size of the abrasive to be added to the magnetic recording media.

That is, use of the polyurethane resin having a hydroxyl group content of as much as 0.5 to 1.0 mmol/g as a component of the binder successfully raises performances of the magnetic recording medium such as electromagnetic conversion characteristics and durability, and this makes the magnetic recording medium well adaptable to high-density recording and digital recording.

The binder is also advantageous in that it does not use any halogen-containing. resins such as generally-used vinyl chloride-base copolymer, and thus can provide magnetic recording media highly respectful to the global environment.

### BRIEF DESCRIPTION OF THE DRAWINGS

The above and other objects, features and advantages of the present invention will become more apparent from the following description of the presently preferred exemplary embodiment of the invention taken in conjunction with the accompanying drawings, in which:

Fig. 1 is a schematic sectional view of a magnetic recording medium based on the present invention applied to one embodiment of the present invention;

Figs. 2A and 2B are each a schematic drawing of a resin composing a binder in one embodiment of the present invention; and

Figs. 3A and 3B are each a schematic drawing of another resin composing a binder in one embodiment of the present invention.

### DESCRIPTION OF THE PREFERRED EMBODIMENTS

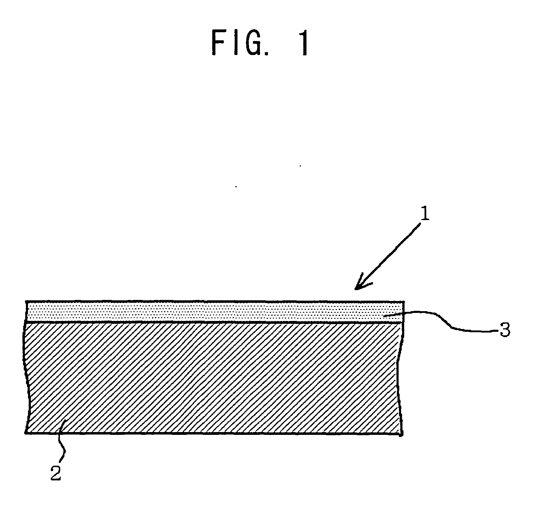

As shown in the schematic sectional view in Fig. 1, a magnetic recording medium **1** of the present invention comprises a non-magnetic support **2**, and a magnetic layer **3** formed thereon, which is formed by coating a magnetic coating material having a magnetic powder and a binder dispersed in a solvent.

### First Embodiment

The first or second magnetic recording medium of the present invention is characterized in that the binder contains two kinds of polyurethane resins such as:
an aromatic polyester polyurethane resin obtained by urethanization of an aromatic polyester, which is obtained by esterification of phthalic acid and diol, with an aromatic diisocyanate such as 4,4'-diphenylmethane diisocyanate (MDI) and 2,4-toluene diisocyanate (TDI); and
a polyurethane resin obtained by urethanization of a glycol having a molecular weight of 60 to 250, amino alcohol or diamine with an aromatic diisocyanate under a condition ensuring a urethane group concentration of 3.0 mmol/g or above, or a polyurethane urea resin obtained by urethanization of the same under a condition ensuring a total concentration of urethane group and urea group of 3.0 mmol/g or above.

Because the binder uses, as a part of the composition thereof, the polyurethane resin having a urethane group concentration of 3.0 mmol/g or above, or a polyurethane urea resin having a total concentration of urethane group and urea group of 3.0 mmol/g or above, the magnetic coated film will have a raised strength and desirable durability. The polyurethane resin (or polyurethane urea resin) used solely is successful in achieving a certain level of strength of the coated film, but tends to weaken the adhesion strength to the non-magnetic support, to enhance thixotropy of the magnetic coating material so as to ruin the coating property. It is therefore necessary to use the resin in combination with other resin. With this regard, the present inventors investigated into various combinations.

As one example, Japanese Laid-Open Patent Publication No. 6-96437 discloses a magnetic recording medium in which the binder comprises a polyurethane resin having a urethane group concentration of 2.5 mmol/g and a polycarbonate polyurethane resin composed of polyvinyl acetal, where only a limited compatibility between the polyurethane resin and the polycarbonate polyurethane resin, and consequently a limited durability, are attainable. The present inventors were the first to find out, through the extensive researches, that the compatibility of the binder resins could be improved, and that a magnetic recording medium excellent in the electromagnetic conversion characteristics and durability could be obtained, by using the polyurethane resin in combination with other polyurethane resin containing the same series of aromatic polyester.

That is, the combined use of the aromatic resins, both having benzene ring skeletons but having no long-chained, strongly-hydrophobic alkyl groups, improves the compatibility of the resins to a considerable degree, raises the dispersibility of the magnetic coating material, and ensures excellent electromagnetic conversion characteristics. The durability is also improved by virtue of the smoothened surface of the magnetic layer.

Next paragraphs will describe the aromatic polyester polyurethane resin used as a component of the binder for the first or second magnetic recording medium according to the present invention.

The aromatic polyester is obtained by dehydration condensation (esterification) of a dicarboxylic acid and a glycol, where synthesis under the presence of excessive glycol results in polyester diol having hydroxyl groups on the both ends thereof, which is available in the present invention.

The aromatic polyester available in the present invention is a phthalic acid-derived polyester (phthalate), where benzene rings contained in the phthalate contributes to make the molecular structure more rigid than that of adipate, to raise the glass transition temperature T_{g} of the resin, and to improve the durability of the magnetic recording medium as the final product.

Examples of the dicarboxylic acid used herein include phthalic acid derivatives such as terephthalic acid (TP), isophthalic acid (IP) and orthophthalic acid, but do not contain any other dicarboxylic acids such as succinic acid, adipic acid (AA), sebacic acid, azelaic acid, acid esters thereof, and acid anhydrides thereof.

Molecular weight of the aromatic polyester is generally expressed by OH value. The OH value refers to an equivalent weight of total hydroxyl group in KOHmg/g, which means an equivalent of KOH (potassium hydroxide). The molecular weight of the aromatic polyester is calculated based on the OH value assuming both ends of the polyester are respectively terminated by hydroxyl groups. The OH value of the aromatic polyester in the present invention is preferably within a range from 10 to 500 KOHmg/g, and is more preferably 50 to 300 KOHmg/g. A OH value less than 10 KOHmg/g results in increase in the molecular weight of the aromatic polyester, and this may undesirably make it difficult to synthesize the polyester *per se,* may decrease the amount of introduction of urethane group (or a combination of urethane group and urea group) after the urethanization, may reduce the inter-molecular network based on hydrogen bonding, and may lower the toughness and strong coagulating force of the polyurethane resin layer. On the contrary, too large hydrogen group value tends to harden the polyurethane resin.

It is necessary to properly adjust the OH value of the aromatic polyester depending on the applications. For an exemplary case where the heat resistance and coagulation energy are to be raised, it is preferable to select a large OH value so as to allow the molecule to have many crosslinkage points with the hardener.

Source materials for the aromatic polyester used in the present invention include terephthalic acid (TP), isophthalic acid (IP), orthophthalic acid and derivatives thereof such as acid anhydrides, and various kinds of glycols.

Specific examples of the active-hydrogen-containing compounds include ethylene glycol (EG); 1,3-propylene glycol (PG); 1,2-PG; 1,4-butanediol (BD); 1,5-pentane glycol; 1,6-hexanediol (HD); 3-methyl-1,5-pentane glycol; neopentyl glycol; 1,8-octane glycol; 1,9-nonanediol; diethylene glycol; cyclohexane-1,4-diol; cyclohexane-1,4-dimethanol; dimer acid diol; TMP (trimethylol propane); glycerin; hexane triol; and ethylene oxide adduct or propylene oxide adduct of quadrol or bisphenol-A.

The aromatic polyester can be obtained by allowing the above-described source materials to undergo dehydration condensation under the presence of a catalyst such as Lewis acid until a desired OH value is attained, where molar number of glycol is in a large excess over the molar number of phthalic acid.

The aromatic polyester polyurethane resin can be synthesized by allowing thus-obtained aromatic polyester to undergo urethanization with other active-hydrogen-containing compound and the aromatic diisocyanate.

Examples of the other active-hydrogen-containing compound may include those similar to glycol which is a source material for the aromatic polyester. More specifically, available examples include water, ethylene glycol (EG); 1,3-propylene glycol (PG); 1,2-PG; 1,4-butanediol (BD); 1,5-pentane glycol; 1,6-hexanediol (HD); 3-methyl-1,5-pentane glycol; neopentyl glycol; 1,8-octane glycol; 1,9-nonane diol; diethylene glycol; cyclohexane-1,4-diol; cyclohexane-1,4-dimethanol; dimer acid diol; TMP; glycerin; hexane triol; and ethylene oxide adducts or propylene oxide adducts of quadrol or bisphenol-A.

Examples of the aromatic diisocyanate compound include 2,4-toluene diisocyanate (may occasionally be referred to as 2,4-TDI, hereinafter); 2,6-toluene diisocyanate (may occasionally be referred to as 2,6-TDI, hereinafter); xylene-1,4-diisocyanate; xylene-1,3-diisocyanate; 4,4'-diphenylmethane diisocyanate (MDI); 2,4'-diphenylmethane diisocyanate; 4,4'-diphenylether diisocyanate; 2-nitrodiphenyl-4,4'-diisocyanate; 2,2'-diphenylpropane-4,4'-diisocyanate; 3,3'-dimethyl diphenylmethane-4,4'-diisocyanate; 4,4'-diphenylpropane diisocyanate; m-phenylene diisocyanate; p-phenylene diisocyanate; naphathylene-1,4-diisocyanate; naphthylene-1,5-diisocyanate; and 3,3'-dimethoxydiphenyl-4,4'-diisocyanate.

The aromatic polyester polyurethane resin used in the present invention may have introduced therein a polar group such as those of amine-base or alkali metal salts of carboxylic acid and sulfonic acid for a purpose of improving dispersibility of the magnetic powder.

The polar group can efficiently be introduced into the aromatic polyester polyurethane resin by a direct urethanization using a chain-elongating agent such as polar-group-containing glycol compound, polar-group-containing amino alcohol compound and polar-group-containing diamine compound.

For example, tertiary amines available as the polar-group-containing, active-hydrogen-containing compounds include aliphatic amine, aromatic amine, alkanolamine and alkoxy-alkylamine. More specifically, they include N-methyl-diethanolamine (NMDEA), N-methyl-diisopropylamine (NMDPA), diethylaminopropane-diol (DEAPD), N-(2-aminoethyl)ethanolamine, N-methyl-ethanolamine, diisopropylamine, piperazine, 2-methyl-piperazine, (hydroxyethyl)piperazine, bis(aminopropyl)piperazine, N-methylaniline and N-methyl-phenyl-amine.

Quaternary ammonium salts can be introduced into the aromatic polyester polyurethane resin in a form of the ammonium salt without using any precursors, or initially in a form of a tertiary amine and then converting it into a quaternary salt with the aid of an alkylation agent or the like, where either of these synthetic methods are effectively used.

Available examples of the quaternary ammonium salts include aliphatic amine salt and quaternary ammonium salt thereof, aromatic quaternary ammonium salt and heterocyclic quaternary ammonium salt, where possible counter ions include those of halogen elements such as chlorine, bromine and iodine, or those of organic acids such as carboxylic acid and phosphoric acid. In general, use of a quaternary ammonium having a halogen counter ion as the polar group may undesirably tend to cause rusting of oil drums used for storage.

More specifically, quaternarizing agents available for quaternarizing the tertiary amine include alkylation agents such as methyl iodide, ethyl iodide, ethyl bromide, *p*-toluenesulfonyl chloride, and ethyl *p*-toluenesulfonate; phosphate triesters; ortho-acetate ester; chlorocarbonate esters such as methyl chlorocarbonate, ethyl chlorocarbonate, *n*-propyl chlorocarbonate, isopropyl chlorocarbonate and 2-ethoxyethyl chlorocarbonate; and halomethane-base carboxylic acid such as monochloroacetic acid and trifluoroacetic acid.

Content of the polar groups such as tertiary amine and quaternary ammonium salt in the present invention preferably falls within a range from 0.01 to 10.0 mmol/g, and more preferably from 0.1 to 0.5 mmol/g. The content exceeding 10.0 mmol/g may improve the dispersibility but may degrade the coating property, and thus may tend to produce streaks. On the contrary, the content less than 0.01 mmol/g may degrade the dispersibility of the coating material.

The alkali metal salt of sulfonic acid can be typified by sodium sulfonate and potassium sulfonate, where a preferable amount of introduction falls within a range from 0.001 to 0.2 mmol/g, and more preferably from 0.01 to 0.09 mmol/g. The amount of introduction less than 0.001 mmol/g may reduce improving effect of the dispersibility, whereas the amount of introduction exceeding 0.2 mmol/g may raise the viscosity of the resin so as to ruin the handling property, may enhance the thixotropy of the magnetic coating material, and thus may ruin the coating property.

Amount of introduction of the carboxylic acid preferably falls within a range from 0.001 to 0.1 mmol/g, and more preferably from 0.01 to 0.05 mmol/g. The amount less than the above range may reduce improving effect of the dispersibility, and exceeding the above range may degrade long-term storage stability since the polar group *per se* can accelerate hydrolysis of the aromatic polyester.

A preferable method used for synthesizing the aromatic polyester polyurethane resin relates to a solution synthesis method by which the aromatic polyester, other active-hydrogen-containing compound and aromatic diisocyanate are reacted in an arbitrary organic solvent so as to expedite the urethanization.

More specifically, the solution synthesis methods refers to a method in which a polyester component, which is a urethane source, an active-hydrogen-containing compound such as glycol, and a polar-group-containing compound are mixed and dissolved in an organic solvent, and allowed to react by adding a diisocyanate compound.

The polyurethane resin is obtained by reacting the diisocyanate component with the active-hydrogen-containing compound under an active-hydrogen-group-excessive condition such that the equivalent ratio of the active-hydrogen-containing groups in the active-hydrogen-containing compound relative to isocyanate groups in the diisocyanate component exceeds 1.0.

The active-hydrogen-group-excessive condition is necessary for obtaining a polyurethane precursor containing no isocyanate group but containing the active-hydrogen-containing groups instead. The equivalent ratio of the active-hydrogen-containing groups in the active-hydrogen-containing compound relative to isocyanate groups in the diisocyanate component preferably falls within a range from 1.0 to 2.0. It is essential to determine a condition by which the resultant polyurethane precursor does not gelate as the introduction of the polyisocyanate component proceeds during the preparation, based on an average number of functional isocyanate groups and an average number of functional groups in the active-hydrogen-containing component affected by the introduction of triol, and to blend the materials so as to satisfy thus-determined condition.

The ratio of blending basically conforms to results of theoretical calculation based on the gelation theory proposed by J. P. Flory and Khum, but practically, the polyurethane precursor can be prepared without causing gelation by allowing both compounds to react in a blending ratio considering a reactivity ratio of the reactive groups contained in the active-hydrogen-containing compound and isocyanate compound.

Reaction apparatus may be of any type as far as the above-described reaction can be expedited in a homogeneous manner, and a specific example relates to a reaction vessel equipped with a stirrer. It is also allowable to use a metal catalyst or an amine-base catalyst generally used for polyurethane production.

A homogeneous resin can be synthesized if the reaction vessel is heated properly up to 40°C to 60°C in order to control the reaction which proceeds during the urethanization process. It is also preferable to allow the reaction to proceed under a nitrogen atmosphere in order to suppress unnecessary side reactions.

Examples of the organic solvents available in the solution synthesis include ketone-base solvents such as methylethyl ketone (MEK), methylisobutyl ketone (MIBK), cyclohexanone and acetone; toluene; xylene and tetrahydrofuran (THF).

Next paragraphs will detail the polyurethane resin having a urethane group concentration of 3.0 mmol/g or above, or the polyurethane urea resin having a total concentration of the urethane group and urea group of 3.0 mmol/g or above, both of which used as components of the first and second magnetic recording media of the present invention.

The polyurethane resin having a urethane group concentration of 3.0 mmol/g or above can be obtained by allowing the active-hydrogen-containing compound and the aromatic diisocyanate to undergo the urethanization so that the urethane group concentration falls within the aforementioned specific range. The active-hydrogen-containing compound, aromatic diisocyanate, polar group source, and methods of urethanization may be similar to those described in the above in relation to the aromatic polyester polyurethane resin.

The urethane group concentration herein refers to the number of urethane bond per 1 g of the polyurethane resin, and falls within a range from 0.5 to 2.0 mmol/g for the polyester polyurethane resin generally used for the magnetic recording media. The urethane group concentration exceeding 2.0 mmol/g has been considered as being not desirable, because such a high concentration generally increases coagulation energy of the resin, drastically ruins the solubility to various organic solvents, increases viscosity of the resin and thus degrades the handling property. For example, Japanese Examined Patent Publication No. 6-19821 describes a binder which contains urethane urea having a total concentration of urethane and urea of 1.8 to 3.0 mmol/g, where the exemplary synthesis of the resin resulted in an excellent durability by virtue of its large urethane bond concentration, but also resulted in lowered electromagnetic conversion characteristics due to degraded dispersibility which is ascribable to increase in the viscosity of the magnetic coating material.

In an effort to solve these problems, we found from our extensive researches that the polyurethane resin having an excellent compatibility with the organic solvent can be synthesized by using a sterically bulky glycol or a glycol having a large-carbon-numbered side chain, even if the urethane group concentration thereof is rather high. The urethane group concentration can further be increased by using glycol having smaller molecular weight.

It is also allowable to introduce a diamine derivative to a part of the active-hydrogen-containing compound. Examples of the diamine derivatives include diamines such as hexamethylenediamine, xylenediamine, isophoronediamine (IPDA), monoethanolamine (MEA), N,N'-dimethylethylenediamine; and amino alcohol. It is still also allowable to use water or urea capable of producing urea bond through reaction with the isocyanate group as disclosed in Japanese Laid-Open Patent Publication No. 61-107531. The above-descried compounds may be used solely or in a form of mixture thereof. The urea group concentration attained by the reaction between amine and isocyanate is defined as 3.0 mmol/g or above in total with the above-described urethane group.

The first and second magnetic recording media of the present invention contains, as components of the binder, two kinds of polyurethane resins, that are, the aforementioned aromatic polyester polyurethane resin, and the polyurethane resin having a urethane group concentration of 3.0 mmol/g or the polyurethane urea resin having a total concentration of urethane group and urea group of 3.0 mmol/g or above.

Because the first and second magnetic recording media of the present invention uses, as a part of the binder, the aforementioned aromatic polyester polyurethane resin, and the polyurethane resin having a urethane group concentration of 3.0 mmol/g or the polyurethane urea resin having a total concentration of urethane group and urea group of 3.0 mmol/g or above, strength of the magnetic coated film can be improved, and this ensures a desirable durability.

Because the binder uses the polyurethane resin or polyurethane urea resin in combination with the polyurethane resin containing the same aromatic polyester, the binder resins will have a desirable compatibility with each other, and the magnetic recording media will consequently have excellent electromagnetic conversion characteristics and durability.

That is, because the binder is based on the combined use of resins both having aromatic benzene ring skeletons but having no long-chained and strongly-hydrophobic alkyl groups, compatibility between the binders is improved to a large extent, and this consequently improves dispersibility of the magnetic coating material to thereby achieve excellent electromagnetic conversion characteristics. This also smoothens the surface of the magnetic layer, and thus improves the durability.

The binder is also advantageous in that it does not use any halogen-containing resins such as generally-used vinyl chloride-base copolymer, and thus can provide magnetic recording media highly respectful to the global environment.

### Second Embodiment

The third magnetic recording medium of the present invention is a magnetic recording medium obtained by coating, on a non-magnetic support, a magnetic coating material having a magnetic powder and a binder dispersed in a solvent, where the binder contains a polyurethane resin which comprises water, glycol or triol having a molecular weight of 60 to 250, diamine, amino alcohol and diisocyanate, and has an OH value of 0.5 to 1.0 mmol/g.

It has been generally believed that the polyurethane resin inevitably retains a large amount of active-hydrogen-containing groups since the resin is produced by reaction with diisocyanate, and cannot easily be polymerized. Polyurethane generally used contains hydroxyl groups in an amount of 0.01 to 0.1 mmol/g, although depending on the molecular weight, and the resin exceeding 0.1 mmol/g has been believed as not being suitable for preparing a magnetic coating material. The present inventors, however, became the first to find out that a magnetic recording medium excellent in the dispersibility and durability can be obtained by limiting the amount of hydroxyl groups in the polyurethane resin within a specific range as described in the above.

The polyurethane resin is a resin compound which comprises the active-hydrogen-containing compound and diisocyanate. Examples of the active-hydrogen-containing compound available herein include glycol or triol having a molecular weight of 60 to 250, diamine, amino alcohol, various amine derivatives as a polar group source, and glycol containing alkali metal salt of sulfonic acid.

Specific examples of the glycol component having a molecular weight of 60 to 250 include low-molecular-weight polyols such as ethylene glycol (EG); 1,3-propylene glycol (PG); 1,2-PG; 1,4-butanediol (BD); 1,5-pentane glycol; 1,6-hexanediol (HD); 3-methyl-1,5-pentane glycol; neopentyl glycol (NPG); 3,3-dimethanol heptane (DMH); 1,8-octane glycol; 1,9-nonane diol; diethylene glycol; cyclohexane-1,4-diol; cyclohexene-1,4-dimethanol; dimer acid diol; TMP; glycerin; hexane triol; and ethylene oxide adduct or propylene oxide adduct of quadrol or bisphenol-A.

Examples of the diamine derivatives include diamines such as hexamethylenediamine, xylenediamine, isophoronediamine (IPDA), monoethanolamine (MEA), N,N'-dimethylethylenediamine; and amino alcohol. It is still also allowable to use water or urea capable of producing urea bond through reaction with the isocyanate group as disclosed in Japanese Laid-Open Patent Publication No. 61-107531.

Examples of the diisocyanate compound include aromatic diisocyanates such as 2,4-toluene diisocyanate (may occasionally be referred to as 2,4-TDI), 2,6-toluene diisocyanate (may occasionally be referred to as 2,6-TDI), xylene-1,4-diisocyanate, xylene-1,3-diisocyanate, 4,4'-diphenylmethane diisocyanate (MDI), 2,4'-diphenylmethane diisocyanate, 4,4'-diphenylether diisocyanate, 2-nitordiphenyl-4,4'-diisocyanate, 2,2'-diphenylpropane-4,4'-diisocyanate, 3,3'-dimethyldiphenylmethane-4,4'-diisocyanate, 4,4'-diphenylpropanediisocyanate, *m*-phenylene diisocyanate, *p*-phenylene diisocyanate, naphthylene-1,4-diisocyanate, naphthylene-1,5-diisocyanate and 3,3'-dimethoxyphenyl-4,4'-diisocyanate; aliphatic diisocyanates such as tetramethylene diisocyanate, hexamethylene diisocyanate (HDI) and lysine diisocyanate; alicyclic diisocyanates such as isophorone diisocyanate (IPDI), hydrogen-added tolylene diisocyanate, hydrogen-added xylene diisocyanate, hydrogen-added diphenylmethane diisocyanate, and tetramethylxylene diisocyanate.

The hydroxyl group concentration expresses the number of hydroxyl groups per 1 g of the polyurethane resin. Hydroxyl groups can react with the isocyanate-base hardener in the magnetic coating material, and can serve as reaction sites for intermolecular crosslinking action. The hydroxyl groups have already been introduced into the conventional binder resin in expectation of provision of adsorption sites to the surface of the magnetic powder. It has, however, been pointed out that introduction of a large amount of hydroxyl groups degrades the compatibility of the polyurethane resin with the organic solvent composing the magnetic coating material, raises the viscosity of the coating material to thereby cause insufficient dispersion.

The present inventors found out that the polyurethane resin having a high urethane group concentration (or urea group concentration), such as being synthesized from a unimolecular or low-molecular-weight, active-hydrogen-containing compound and isocyanate, can successfully be raised in the hydroxyl group concentration while keeping affinity with the organic solvent, unlike the conventional resin.

The present inventors were also the first to synthesize the polyurethane resin having an excellent compatibility with the organic solvent even if the urethane group concentration thereof is rather high, by using a sterically bulky glycol or a glycol having a high-carbon-numbered side chain.

Because a large amount of hydroxyl groups can'be introduced by using the aforementioned polyurethane resin, the crosslinking property can be improved, and as a consequence, the dispersibility and durability can also be upgraded to a considerable degree.

The polyurethane resin may be introduced with polar groups of amine-base, or comprises alkali metal salt of carboxylic acid or sulfonic acid in order to further improve the dispersibility of the magnetic powder.

Methods of introducing the polar groups into the polyurethane resin, and types and amount of introduction of the polar groups of amine-base, or comprises alkali metal salt of carboxylic acid or sulfonic acid may be the same as described in the above in relation to the first and second magnetic recording media of the present invention, and these ensure the same effects.

Next paragraphs will detail methods of preparing the polyurethane resin used in the present invention.

A preferable method used for synthesizing the polyurethane resin relates to a solution synthesis method by which the active-hydrogen-containing compound and the diisocyanate are reacted in an arbitrary organic solvent.

More specifically, the solution synthesis methods refers to a method in which a polyester component, which is a urethane source, an active-hydrogen-containing compound such as glycol having a molecular weight of 60 to 250, and a polar-group-containing compound are mixed and dissolved in an organic solvent, and allowed to react by adding a diisocyanate compound.

The polyurethane resin is obtained by reacting the diisocyanate component with the active-hydrogen-containing compound under an active-hydrogen-group-excessive condition such that the equivalent ratio of the active-hydrogen-containing groups in the active-hydrogen-containing compound relative to isocyanate groups in the diisocyanate component exceeds 1.0.

The active-hydrogen-group-excessive condition is necessary for obtaining a polyurethane precursor containing no isocyanate group but containing the active-hydrogen-containing groups instead. The equivalent ratio of the active-hydrogen-containing groups in the active-hydrogen-containing compound relative to isocyanate groups in the diisocyanate component preferably falls within a range from 1.0 to 2.0. It is essential to determine a condition by which the resultant polyurethane precursor does not gelate as the introduction of the polyisocyanate component proceeds during the preparation, based on an average number of functional isocyanate groups and an average number of functional groups in the active-hydrogen-containing component affected by the introduction of triol, and to blend the materials so as to satisfy thus-determined condition.

The ratio of blending basically conforms to results of theoretical calculation based on the gelation theory proposed by J. P. Flory and Khum, but practically, the polyurethane precursor can be prepared without causing gelation by allowing both compounds to react in a blending ratio considering a reactivity ratio of the reactive groups contained in the active-hydrogen-containing compound and isocyanate compound.

Reaction apparatus may be of any type as far as the above-described reaction can be expedited in a homogeneous manner, and a specific example relates to a reaction vessel having a stirrer assembly. It is also allowable to use a metal catalyst or an amine-base catalyst generally used for polyurethane production for accelerating the reaction.

A homogeneous resin can be synthesized if the reaction vessel is heated properly up to 40°C to 60°C in order to control the reaction which proceeds during the urethanization process. It is also preferable to allow the reaction to proceed under a nitrogen atmosphere in order to suppress unnecessary side reactions.

Examples of the organic solvents available for the solution synthesis include ketone-base solvents such as methylethyl ketone (MEK), methylisobutyl ketone (MIBK), cyclohexanone and acetone; toluene; xylene and THF.

The polyurethane resin will successfully be adjusted in the glass transition temperature (T_{g}) thereof by using the polyester polyol having a molecular weight of 500 to 2000 in an amount of 10% to 50% by weight. T_{g} of the magnetic coated film of the magnetic recording medium preferably falls within a range from 50°C to 100°C, and more preferably from 60°C to 80°C.

Use of an aliphatic polyester polyol having a relatively large molecular weight will lower Tg, whereas no addition of polyester polyol or addition of aromatic polyester polyol such as phthalate instead will be effective for keeping high T_{g}.

Because the binder contains the polyurethane resin having a large amount of active hydroxyl groups introduced therein, the third magnetic recording medium of the present invention can be improved in the strength of the coated film and in durability.

That is, use of the polyurethane resin having a hydroxyl group content of as much as 0.5 to 1.0 mmol/g as a component of the binder successfully raises performances of the magnetic recording medium such as electromagnetic conversion characteristics and durability, and this makes the magnetic recording medium well adaptable to high-density recording and digital recording.

The binder is also advantageous in that it does not use any halogen-containing resins such as generally-used vinyl chloride-base copolymer, and thus can provide magnetic recording media highly respectful to the global environment.

Next, composition of the magnetic recording media according to the present invention (first, second and third magnetic recording media) will be described.

The ferromagnetic powders available for the magnetic recording medium of the present invention may be publicly-known ones, and examples of which include γ-FeOₓ (x = 1.33 to 1.5), Co-modified γ-FeOₓ (x = 1.33 to 1.5), ferromagnetic alloy having Fe, Ni or Co as a major component (75% or above), barium ferrite and strontium ferrite.

The ferromagnetic powder may include, besides the predetermined elements, additional elements such as Al, Si, S, Sc, Ti, V, Cr, Cu, Y, Mo, Rh, Pd, Ag, Sn, Sb, Te, Ba, Ni, Ta, W, Re, Au, Hg, Pb, Bi, La, Ce, P, Mn, Zn, Co, Sr and B. In particular in the present invention, a more preferable magnetic powder refers to ferromagnetic pulverized metal powders, where those having a saturation magnetization as of 100 to 200 Am²/kg, a specific surface area measured by the BET method of 45 to 60 m²/g and coercive force of 90 to 200 kA/m show distinctive effects.

In the magnetic recording medium of the present invention, components other than the non-magnetic support and ferromagnetic powder mixed into the magnetic layer, that are binder, abrasive, antistatic agent, rust preventive agent, or solvent used for preparing the magnetic coating material, may be any of publicly-known materials and may be used without limitations.

Materials for composing the non-magnetic support may be any of those generally used for the magnetic recording media, and examples thereof include polyesters such as polyethylene terephthalate and polyethylene naphthalate; polyolefins such as polyethylene and polypropylene; cellulose derivatives such as cellulose triacetate, cellulose diacetate and cellulose acetate butylate; vinyl resins such as poly(vinyl chloride) and poly(vinylidene chloride); polycarbonate; polyimide; polyamideimide; other plastics; metals such as aluminum and copper; light alloys such as aluminum alloy and titanium alloy; ceramics and single-crystalline silicon.

The carbon black available for the magnetic layer may be those of any kind. The carbon blacks include acetylene black and furnace black based on difference in the production process therefor.

The carbon black advantageously has a DBP oil absorption of 30 to 150 ml/100 g, more preferably 50 to 150 ml/100 g, a mean particle size of 5 to 150 nm, more preferably 15 to 50 nm, and a specific surface area measured by the BET method of 40 to 300 m²/g, more preferably 100 to 250 m²/g. The water content thereof is preferably within a range from 0.1% to 10%, a tap density from 0.1 to 1 g/cc, and pH from 2.0 to 10. Any carbon black having a larger DBP oil absorption will have a high viscosity and consequently ruin the dispersibility. On the contrary, too small value will result in a longer duration of time for the dispersion due to a poor dispersibility. A smaller mean particle size results in a longer duration of time for the dispersion but results in a desirable surface property, whereas the surface property degrades with increase in the particle size. The above-described range of the particle size is therefore preferable.

Examples of the carbon black satisfying the above-described conditions include Raven 1250 (trade name, product of Columbian Chemical Company, particle size = 23 nm, BET value = 135.0 m²/g, DBP oil absorption = 58.0 ml/100 g), Raven 1255 (particle size = 23 nm, BET value = 125.0 m²/g, DBP oil absorption = 58.0 ml/100 g), Raven 1020 (particle size = 27 nm, BET value = 95.0 m²/g, DBP oil absorption = 60.0 ml/100 g), Raven 1080 (particle size = 28 nm, BET value = 78.0 m²/g, DBP oil absorption = 65.0 ml/100 g), Raven 1035, Raven 1040, Raven 1060, Raven 3300, Raven 450, Raven 780; and Conductex SC (trade name, product of (Columbian Chemical Company, particle size = 20 nm, BET value = 220.0 m²/g, DBP oil absorption = 115.0 ml/100 g).

Other available examples include #80 (trade name, product of Asahi Carbon Co., Ltd., particle size = 23 nm, BET value = 117.0 m²/g, DBP oil absorption = 113.0 ml/100 g), #22B (trade name, product of Mitsubishi Chemical Corporation, particle size = 40 nm, BET value = 5.0 m²/g, DBP oil absorption = 131.0 ml/100 g), #20B (*ditto,* particle size = 40 nm, BET value = 56.0 m²/g, DBP oil absorption = 115.0 ml/100 g), Black Pearls L (trade name, product of Cabot Corporation, particle size = 24 nm, BET value = 250.0 m²/g, DBP oil absorption = 60.0 ml/100 g), Black Pearls 800 (particle size = 17.0 nm, BET value = 240.0 m²/g, DBP oil absorption = 75.0 ml/100 g), Black Pearls 1000, Black Pearls 1100, Black Pearls 700 and Black Pearls 905.

The magnetic recording medium of the present invention may have a non-magnetic, back-coat layer formed on a surface of the non-magnetic support opposite to the magnetic layer side. Thickness of the back-coat layer preferably resides within a range from 0.1 to 2.0 µm, and more preferably from 0.3 to 1.0 µm, where any publicly known materials are available.

The lubricant may be any of publicly known materials. Available examples thereof include higher fatty acid ester, silicone oil, fatty-acid-modified silicone, fluorine-containing silicone, other fluorine-containing lubricants, polyolefin, polyglycol, alkyl phosphate ester and metal salt thereof, polyphenyl ether, fluorinated alkyl ether, amine-base lubricants such as amine salt of alkylcarboxylic acid and amine salt of fluorinated alkylcarboxylic acid, C₁₂ to C₂₄ alcohols (non-saturated or branched compounds also allowable), and C₁₂ to C₂₄ higher fatty acids.

The higher fatty acid ester components may be C₁₂ to C₃₂ higher fatty acid esters (non-saturated or branched compounds also allowable), and specific examples thereof include methyl ester, ethyl ester, propyl ester, isopropyl ester, butyl ester, pentyl ester, hexyl ester, heptyl ester, octyl ester, etc. of lauric acid, myristic acid, palmitic acid, stearic acid, isostearic acid, arachidic acid (eicosanoic acid), oleic acid, eicosenoic acid, elaidic acid, behenic acid, linolic acid, linolenic acid.

Specific compounds can be enumerated by butyl stearate, pentyl stearate, heptyl stearate, octyl stearate, isooctyl stearate, butoxyethyl stearate, octyl myristate, isooctyl myristate and butyl palmitate. The lubricant may be used solely or in combination with a plurality of lubricants.

The abrasive may be any publicly-known material having a Mohs hardness of 6 or above, and including as a major component thereof any one of, or any combination of, α-alumina, β-alumina, fused alumina, silicon carbide, chromium oxide, cerium oxide, α-iron oxide, corundum, diamond, silicon dioxide, garnet, silicon nitride, silicon boride, molybdenum carbide, boron carbide, tungsten carbide and titanium oxide.

The abrasive has a mean particle size preferably within a range from 0.01 to 2 µm, where it is also allowable, if necessary, to combine abrasives differing in the particle size, or to widen the particle size distribution of a single kind of abrasive.

Besides the above-described carbon blacks, publicly known antistatic agents such as naturally-occurred surfactant, nonionic surfactant and cationic surfactant are available.

It is also allowable to use any publicly known coupling agent in the present invention. Typical examples of the coupling agent include silane coupling agent, titanate coupling agent and aluminate coupling agent. Amount of addition of the coupling agent per 100 parts by weight of the magnetic powder preferably falls within a range from 0.05 to 10.00 parts by weight, and more preferably from 0.1 to 5.00 parts by weight.

Examples of the silane coupling agent preferably used include vinyl silane compounds such as γ-methacryloxypropyl trimethoxysilane and vinyl triethoxysilane; epoxysilane compounds such as β-(3,4-epoxycyclohexyl)ethyl trimethoxysilane and γ-glycidoxypropyl trimethoxysilane; aminosilane compounds such as γ-aminopropyl triethoxysilane, N-β(aminoethyl)-γ-aminopropylmethyl dimethoxysilane; and mercaptosilane compounds such as γ-mercaptopropyl trimethoxysilane.

The titanate coupling agents include tetra-*n*-butoxy titanium, tetraisopropoxy titanium, bis [2-[(2-aminoethyl)amino]ethanolate][2-[(2-aminoethyl)amino]ethanolate-0](2-propanolate)titanium, tris(isooctadecanoate-0)(2-propanolate)titanium, bis(ditridecylphosphite-0")tetrakis(2-propanolate) dihydrogen titanate, bis(dioctylphosphite-0")tetrakis(2-propanolate)dihydrogen titanate, tris(dioctylphosphite-0")(2-propanolate)titanium, bis(dioctylphosphite-0") [1,2-ethane diolate(2-)-0,0']titanium, tris(dodecylbenzenesulfonate-0)(2-propanolate)titanium, and tetrakis[2,2-bis[(2-propenyloxy)methyl]-1-butanolate titanate.

Specific trade names of the titanate coupling agent preferably available include Plenact (product of Ajinomoto Fine-Techno Co., Inc.) KR TTS, KR 46B, KR 55, KR 41B, KR 38S, KR 138S, KR 238S, 338X, KR 12, KR 44, KR 9SA and KR 34S.

The aluminate coupling agent include alkylacetoacetate aluminum diisopropylate, and a preferable product is known with a name of Plenact AL-M (product of Ajinomoto Fine-Techno Co., Inc.).

Methods of preparing the magnetic coating material may be selected from any publicly-known methods with the aid of roll mill, ball mill, sand mill, dyno-mill, highspeed stone mill, basket mill, disperser, homomixer, kneader, continuous kneader, extruder, homogeniser, ultrasonic dispersion apparatus or the like.

Instead of being directly coated with the magnetic coating material, the non-magnetic support may also be pre-treated by corona discharge treatment or electron beam irradiation treatment.

Examples of method of coating on the non-magnetic support include air doctor coating, blade coating, rod coating, extrusion coating, air knife coating, squeeze coating, dip coating, reverse roll coating, gravure coating, transfer roll coating and cast coating, while not being limited thereto. Simultaneous multi-layer coating based on extrusion coating is also allowable.

In order to improve the solvent resistance in the present invention, it is preferable to use an isocyanate-base hardener having an average number of functional groups of 2 or more. That is, either of polymeric form of polyisocyanate or polyol adduct of polyisocyanate can preferably be used in the present invention.

Introduction of isocyanurate groups desirably results in an excellent heat resistance and durability. For a case where the isocyanurate group and/or other isocyanate polymer are contained at a certain ratio in the molecule of the polyisocyanate compound, the resultant polyurethane-base component may have branched points to a degree not causative of gelation thereof.

The hardener typically includes aromatic isocyanate and aliphatic isocyanate, where adduct thereof formed with any active-hydrogen-containing compound is preferable. In particular in the first and second magnetic recording media according to the present invention, it is more preferable that the binder contains a hardener which comprises the aromatic isocyanate when the durability of the magnetic coated film is taken into account.

Examples of the aromatic isocyanate include toluene diisocyanate (TDI); 1,3-xylene diisocyanate; 1,4-xylene diisocyanate; 4,4'-diphenylmethane diisocyanate (MDI); *p*-phenyl diisocyanate; *m*-phenyl diisocyanate; and 1,5-naphthyl diisocyanate.

Examples of the aliphatic isocyanate include hexamethylene diisocyanate (HDI), dicyclohexylmethane diisocyanate, cyclohexane diisocyanate and isophorone diisocyanate (IPDI).

The active-hydrogen-containing compounds capable of forming adduct with these materials include ethylene glycol; 1,4-butanediol; 1,3-butanediol; neopentyl glycol; diethylene glycol; trimethylol propane and glycerin, where the average molecular weight thereof preferably falls within a range from 100 to 5000.

Amount of addition of the hardener generally falls within a range from 0 to 20 parts by weight relative to the weight of the binder resin, and more preferably from 0 to 10 parts by weight. Theoretically, a weight of the hardener corresponding to the amount of isocyanate equivalent to that of the active hydrogen in the polyurethane resin composition (or binder resin composition) may be sufficient. However in the practical production, the amount of isocyanate equivalent to that of the active hydrogen often results in shortage, because the isocyanate as a component of the hardener can be consumed by reaction with water. It is therefore effective to add the hardener in an amount excessive by 10% to 50% over the equivalence of the active hydrogen.

For a case where a hardener comprising polyisocyanate is used, a stronger adhesive force can be obtained by coating the magnetic coating material and then heating it at 40°C to 80°C for several hours so as to accelerate the curing reaction.

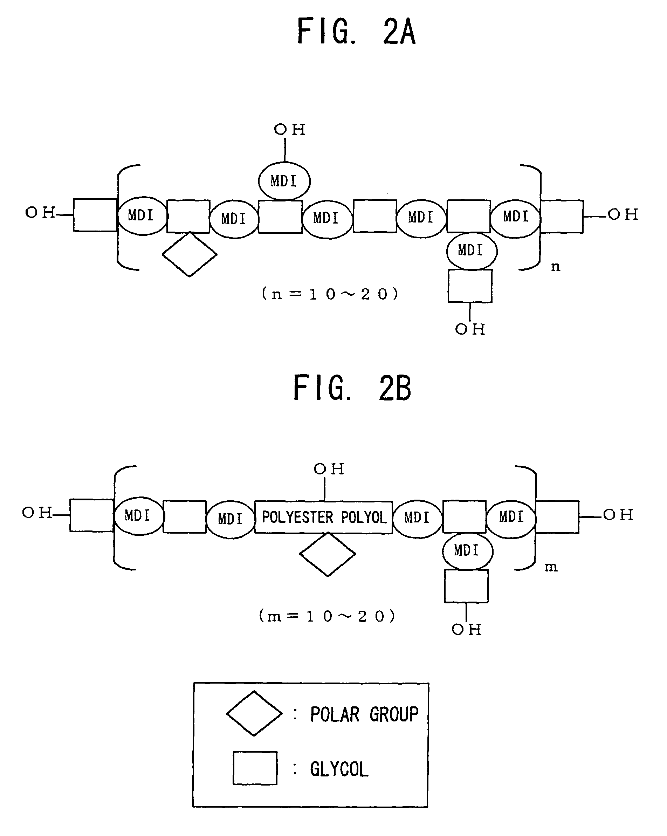

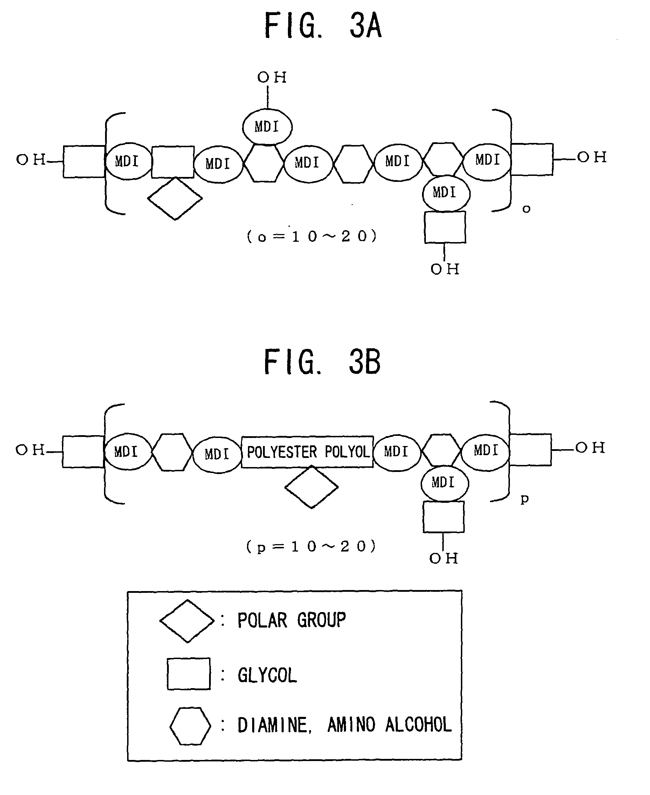

Figs. 2 and 3 show schematic drawings of resins composing the binder used in the magnetic recording media of the present invention, where Fig. 2A shows a polyurethane-type resin, Fig. 2B shows a polyester-polyurethane-type resin, Fig. 3A shows a polyurethane-urea-type resin, and Fig. 3B shows a polyester-containing, polyurethane-urea-type resin.

### [Examples]

Next paragraphs will describe specific Examples of the present invention, where the present invention is by no means limited to these Examples.

### Example 1

### [Exemplary Synthesis of Polyurethane Resin]

In a reaction vessel equipped with a stirrer, a thermometer and a nitrogen-sealed tube, the glycol components and polar-group-containing diol compounds shown in Tables 1 to 3 below were mixed, and then solubilized by adding MEK (methyl ethyl ketone) so as to adjust the solid content to 70% (wt%). The mixture was then added with 10 ppm of dibutyl tin dilaurylate, and stirred at 70°C. The glycol mixture was further added with MDI (4,4'-diphenylmethane diisocyanate) expressed by formula (1) below so as to attain an R value (OH mol/NCO mol) of 0.95, and the stirring was continued at 70°C for 24 hours. A small amount of polyurethane resin was collected from the reaction mixture, dissolved in THF (tetrahydrofuran) so as to attain a concentration of 0.1 wt%, and polystyrene-equivalent molecular weight was measured by GPC (gel permeation chromatography). The reaction was continued while properly adding MDI so as to adjust the number average molecular weight (Mₙ) to 20,000 to 80,000. When a target molecular weight was reached, the reaction mixture was diluted with MEK/TOL (1:1) mixed solution so as to adjust the solid content to 30%, to thereby synthesize the polyurethane resin.

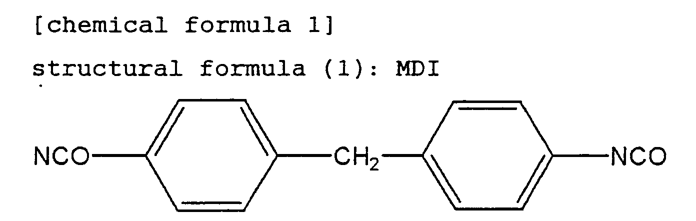

Various types of polyurethane resins were also synthesized by the methods similar to a series of those described in the above. Compositions of the individual polyurethane resins were listed in Tables 1 to 3 below.

**[Table 1]**

| Exemplary Syntheses of Polyurethane Resins | | | | | | | |
|---|---|---|---|---|---|---|---|
| Polyurethane | | PU1 | PU2 | PU3 | PU4 | PU5 | PU6 |
| Source glycol | | DMH/NPG | DMH/NPG | CHDM/EG | DMH/NPG | DMH | NPG/HMDA |
| Polar-group-containing compound | | DEAPD | NMDEA | NMDEA +PTSM | SO₃Na | DEAPD +PTSM | DEAPD |
| | | | | | | | |
| Polar group content (mmol/g) | | 0.2 | 0.2 | 0.2 | 0.1 | 0.2 | 0.5 |
| Diisocyanate (molar ratio) | | MDI 0.95 | MDI 0.95 | TDI 0.96 | MDI 0.95 | MDI 0.96 | MDI 0.97 |
| Urethane group concentration (mmol/g) | | 4.8 | 4.8 | 6.5 | 3.5 | 4.8 | 5.2 |
| GPC molecular weight | Mn(×10⁴) | 24,000 | 30,000 | 30,000 | 21,000 | 31,000 | 40,000 |
| | Mw(×10⁴) | 48,000 | 60,000 | 60,000 | 42,000 | 62,000 | 80,000 |

**[Table 2]**

| Exemplary Syntheses of Polyurethane Resins | | | | | | |
|---|---|---|---|---|---|---|
| Polyurethane | | PU7 | PU8 | PU9 | PU10 | PU11 |
| Source glycol | | CHDM/HMDA | CHDM | Bisphenol-A | BEHT | CL-500/CHDM |
| Polar-group-containing compound | | NMDEA +PTSM | NMDEA | NMDEA | NMDEA | NMDEA |
| | | | | | | |
| Polar group content (mmol/g) | | 0.2 | 0.5 | 0.1 | 0.2 | 0.2 |
| Diisocyanate (molar ratio) | | TDI 0.95 | MDI 0.96 | MDI 0.94 | MDI 0.95 | MDI 0.96 |
| Urethane group concentration (mmol/g) | | 5.3 | 5.3 | 3.0 | 3.5 | 3.0 |
| GPC molecular weight | Mn(×10⁴) | 22,000 | 29,000 | 15,000 | 21,000 | 23,000 |
| | Mw(×10⁴) | 44,000 | 58,000 | 30,000 | 42,000 | 46,000 |

**[Table 3]**

| Exemplary Syntheses of Polyurethane Resins | | | | | | |
|---|---|---|---|---|---|---|
| Polyurethane | | PU12 | PU13 | PU14 | PU15 | PU16 |
| Source polyester | | Polyester 1 | Polyester 1 | Polyester 2 | Polyester 2 | Polyester 3 |
| Source glycol | | NPG | NPG | Bisphenol-A | DMH | DMH |
| Polar-group-containing compound | | DEAPD | NMDEA | DEAPD +PTSM | SO₃Na | SO₃Na |
| | | | | | | |
| Polar group content (mmol/g) | | 0.2 | 0.2 | 0.2 | 0.2 | 0.2 |
| Diisocyanate (molar ratio) | | MDI 0.97 | MDI 0.97 | MDI 0.97 | MDI 0.97 | MDI 0.97 |
| Urethane group concentration (mmol/g) | | 2.3 | 2.9 | 1.1 | 1.6 | 1.6 |
| GPC molecular weight | Mn(×10⁴) | 25,000 | 26,000 | 30,000 | 31,000 | 29,000 |
| | Mw(×10⁴) | 50,000 | 52,000 | 60,000 | 62,000 | 58,000 |

where in Tables 1 to 3:
· PU12 to PU15 denote polyester polyurethane resins;
· PU10 and PU 11 denote polyurethane resins in Comparative Example;
· PU16 denotes a polyester polyurethane resin in Comparative Example;
· Polyester 1 is an isophthalate of 1,4-BG, Mn = 2,000;
· Polyester 2 is a polyester composed of NPG and isophthalic acid/terephthalic acid (1/1), Mn = 2,000;
· Polyester 3 is a polyester composed of adipic acid and 1,4-BG, Mn = 2,000;
· DEAPD = diethylaminopropane diol;
· NMDEA = N-methyl-diethanolamine;
· SO₃Na: DMIS-containing polyester (isophthalic acid/NPG/DMIS, molecular weight = 1,000);
· PTSM = methyl *p*-toluenesulfonate (obtained in a form of quaternary ammonium salt using a quaternary agent);
· HMDA = hexamethylenediamine;
· HDI = hexamethylene diisocyanate;
· BEHT = bis(2-hydroxyethyl)terephthalate; and
· CL-500 = ring-opened polymer of ε-caprolactone, average molecular weight = 500.

It is to be noted that TDI (toluene diisocyanate) found in Tables 1 to 3 is expressed by structural formula (2) below.

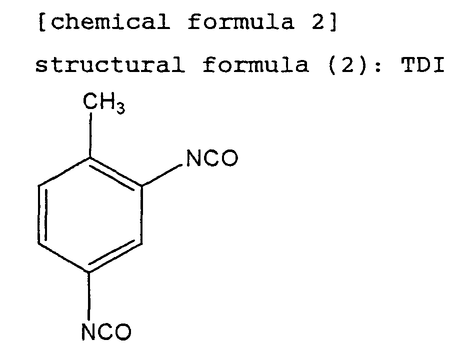

### [Exemplary Preparation of Magnetic Coating Material]

According to the compositions below, magnetic coating materials for forming the magnetic layer were prepared.

### <Magnetic Coating Liquid>

The magnetic coating composition described below was kneaded using a continuous kneader, dispersed using a sand mill, added with 4 parts by weight of polyisocyanate and 1 part by weight of myristic acid, filtered through a filter having an average pore size of 1 µm, to thereby obtain magnetic coating materials.

| | |
|---|---|
| metal magnetic powder (σs = 150 Am²/kg, 56m²/g, Hc = 127kA/m) | 100 parts by weight |
| binder: polyurethane resin (See Tables 1 to 3 above, and Tables 4 to 8 below.) | variable amount |
| carbon black (product of Cabot Corporation; trade name: BP-L) | 2 parts by weight |
| alumina (product of Sumitomo Chemical Co., Ltd.; trade name: HII-60A) | 6 parts by weight |
| butyl stearate | 1 part by weight |
| methylethyl ketone | 80 parts by weight |
| cyclohexanone | 80 parts by weight |
| toluene | 80 parts by weight |

Each of thus-dispersed magnetic coating material was coated on a 10-µm-thick polyethylene terephthalate film by die coating so as to attain a thickness of 3.0 µm. After calendering, the obtained broad film was cured at 60°C for 24 hours, and slit in a width of 1/2 inches, to thereby produce video tapes.

Thus-produced individual video tapes were then subjected to evaluation of dispersibility, magnetostatic characteristics, durability, electromagnetic conversion characteristics, runnability and surface roughness. The durability was evaluated through continuous repetitive use of the virgin portion only.

### [Dispersibility]

The magnetic coating liquid was coated on a polyethylene terephthalate film (14.0-µm thick), dried, and glossiness of the coated surface was measured using a digital variable-angle glossmeter VG-1D, product of Nippon Denshoku Industries, Co., Ltd., at an incident angle of 45° . Glossiness of the individual tapes were expressed based on the evaluation criteria listed below:
○: glossiness > 180%;
Δ: 180% > glossiness ≥ 150%; and
×: glossiness < 150%.

### [Magnetostatic Characteristics]

Magnetostatic characteristics of the obtained tapes were measured using super-high-sensitivity, vibration sample magnetometer (VSM-P10-15auto) dedicated for room temperature use, product of Toei Industry Co., Ltd., under conditions of 20°C, 50% RH.

### [Durability]

Using Betacam VTR (product of SONY corporation, trade name: BVW-75), 125 cassettes of 120-minute virgin tape were recorded/reproduced continuously for 500 hours under conditions of 20°C and 50%RH, and variations in the output were measured.
ⓞ: no variation in the output, no powder drop on the slide-contact surface of the head;
○: no variation in the output, some powder drop on the slide-contact surface of the head;
Δ: output variation within ±2.0 dB; and
×: clogging of the head, no output producible.

### [Electromagnetic Conversion Characteristics]

Using digital Betacam VTR (product of SONY Corporation, trade name: DVW-500), electromagnetic conversion characteristics were measured at a measurement frequency of 32 MHz, where difference from Comparative Example 1 was determined while assuming the output of Comparative Example 1 as 0 dB.

### [Runnability]

Using Betacam VTR (product of SONY Corporation, trade name: BVW-75), each tape for 120-minute use were continuously run 200 times under a condition of 20°C, 50%RH.
○: running completed;
Δ: running destabilized due to increased friction; and
×: sticking occurred due to increased friction.

Results of the individual evaluation subjects in Comparative Examples were shown in Tables 4 and 5, and those in Examples were in Tables 6 to 8.

**[Table 4]**

| Characteristics Evaluation of Magnetic Recording Media | | | | | | |
|---|---|---|---|---|---|---|
| | | Comparative Example 1 | Comparative Example 2 | Comparative Example 3 | Comparative Example 4 | Comparative Example 5 |
| Magnetic layer | Polyurethane resin | VAGH | ← | VMCH | ← | MR-110 |
| | | | | | | |
| | amount of addition (parts by weight) | 10 | ← | ← | ← | ← |
| | Polyester polyurethane resin | PU12 | PU13 | PU14 | PU15 | UR-8200 |
| | | | | | | |
| | amount of addition (parts by weight) | 10 | ← | ← | ← | ← |
| Characteristics | Gloss | ○ | ○ | ○ | ○ | ○ |
| | Magnetostatic characteristics Rs (%) | 82.1 | 82.6 | 81.2 | 82.1 | 81.6 |
| | Durability | × | × | × | × | × |
| | Electric characteristics QF (dB) | 0.0 | -0.1 | -0.1 | -0.5 | -1.0 |
| | Runnability | ○ | ○ | ○ | ○ | ○ |

**[Table 5]**

| Characteristics Evaluation of Magnetic Recording Media | | | | | |
|---|---|---|---|---|---|
| | | Comparative Example 6 | Comparative Example 7 | Comparative Example 8 | Comparative Example 9 |
| Magnetic layer | Polyurethane resin | - | PU1 | PU1 | PU1 |
| | | | | | |
| | amount of addition (parts by weight) | - | 10 | 10 | 10 |
| | Polyester polyurethane resin | PU12 | PU16 | PU10 | PU11 |
| | | | | | |
| | amount of addition (parts by weight) | 20 | 10 | 10 | 10 |
| Characteristics | Gloss | Δ | ○ | ○ | × |
| | Magnetostatic characteristics Rs (%) | 80.1 | 81.2 | 82.3 | 72.3 |
| | Durability | Δ | Δ | Δ | Δ |
| | Electric characteristics QF (dB) | -1.0 | -0.6 | 0.5 | -3.0 |
| | Runnability | ○ | ○ | ○ | × |

where in Tables 4 and 5,
- VAGH:: trade name "Vinylite VAGH", product of Union Carbide Corporation, vinyl chloride/vinyl acetate/vinyl alcohol copolymer (degree of polymerization = 420);
- VMCH:: trade name "Vinylite VMCH", product of Union Carbide Corporation, vinyl chloride/vinyl acetate/maleic acid copolymer (degree of polymerization = 450);
- UR-8200:: trade name "UR-8200", product of Toyobo Co., Ltd., (polar group = SO₃Na, urethane group concentration = 2.0 mmol/g (measured value)); and
- MR-110:: trade name "MR-110", product of ZEON Corporation, epoxy group, hydroxyl group and sulfate group-containing vinyl chloride-base copolymer, average degree of polymerization = 300 (JIS K6721).

**[Table 6]**

| Characteristics Evaluation of Magnetic Recording Media | | | | | | |
|---|---|---|---|---|---|---|
| | | Example 1 | Example 2 | Example 3 | Example 4 | Example 5 |
| Magnetic layer | Polyurethane resin | PU1 | PU2 | PU3 | PU4 | PU5 |
| | | | | | | |
| | amount of addition (parts by weight) | 10 | ← | ← | ← | ← |
| | Polyester polyurethane resin | PU12 | ← | ← | ← | ← |
| | | | | | | |
| | amount of addition (parts by weight) | 10 | ← | ← | ← | ← |
| Characteristics | Gloss | ○ | ○ | ○ | ○ | ○ |
| | Magnetostatic characteristics Rs (%) | 85.3 | 86.2 | 85.1 | 85.3 | 84.3 |
| | Lability Durability | ⓞ | ⓞ | ⓞ | ⓞ | ⓞ |
| | Electric characteristics QF (dB) | 2.6 | 2.5 | 2.5 | 3.0 | 2.6 |
| | Runnability | ○ | ○ | ○ | ○ | ○ |

**[Table 7]**

| Characteristics Evaluation of Magnetic Recording Media | | | | | | |
|---|---|---|---|---|---|---|
| | | Example 6 | Example 7 | Example 8 | Example 9 | Example 10 |
| Magnetic layer | Polyurethane resin | PU6 | PU7 | PU8 | ← | ← |
| | | | | | | |
| | amount of addition (parts by weight) | 10 | ← | 15 | 13 | 10 |
| | Polyester polyurethane resin | PU12 | ← | ← | ← | ← |
| | | | | | | |
| | amount of addition (parts by weight) | 10 | ← | 5 | 7 | 10 |
| Characteristics | Gloss | ○ | ○ | ○ | ○ | ○ |
| | Magnetostatic characteristics Rs (%) | 85.6 | 85.2 | 83.1 | 84.2 | 85.3 |
| | Durability | ⓞ | ⓞ | ⓞ | ⓞ | ⓞ |
| | Electric characteristics QF (dB) | 3.2 | 2.9 | 2.1 | 2.6 | 3.2 |
| | Runnability | ○ | ○ | ○ | ○ | ○ |

**[Table 8]**

| Characteristics Evaluation of Magnetic Recording Media | | | | | |
|---|---|---|---|---|---|
| | | Example 11 | Example 12 | Example 13 | Example 14 |
| Magnetic layer | Polyurethane resin amount of addition (parts by weight) | PU9 | ← | ← | ← |
| | | 8 | ← | ← | ← |
| | Polyester polyurethane resin amount of addition (parts by weight) | PU12 | PU13 | PU14 | U15 |
| | | 10 | ← | ← | ← |
| Characteristics | Gloss | ○ | ○ | ○ | ○ |
| | Magnetostatic characteristics Rs (%) | 85.2 | 86.1 | 84.2 | 82.1 |
| | Durability | ⓞ | ⓞ | ⓞ | ⓞ |
| | Electric characteristics QF (dB) | 3.4 | 3.6 | 3.0 | 2.6 |
| | Runnability | ○ | ○ | ○ | ○ |

It is known from results shown in Table 4 that Comparative Examples 1 to 5, based on combination of vinyl chloride-base copolymer and polyurethane resin, showed certain levels of dispersibility, but only insufficient levels of durability.

It is known from Table 5 that Comparative Example 6, using a binder solely composed of an aromatic polyester polyurethane, showed only a poor dispersibility, and consequently showed poor glossiness and electromagnetic conversion characteristics.

Comparative Example 7, based on a combination with an aliphatic polyester polyurethane, was found to result in unsatisfactory dispersibility and durability.

Comparative Example 8, using a glycol component having a molecular weight of 250 or above, was found to result in only an insufficient durability.

Comparative Example 9, using a polycaprolactone having an average molecular weight of 500, was found to result in a poor dispersibility, and consequently in poor electromagnetic conversion characteristics.

On the contrary, as is obvious from Tables 6 to 8, all of Examples 1 to 7, based on altered combinations of polyurethane resins, showed desirable results. Similarly, all of Examples 8 to 10, based on altered ratios of urethane resins, also showed desirable results and well support the present invention.

As is obvious from the above, the magnetic recording medium of the present invention, using, as a part of the binder thereof, the polyurethane resin having a urethane group concentration of 3.0 mmol/g or above, or the polyurethane urea resin having a total concentration of urethane group and urea group of 3.0 mmol/g or above, can successfully attain a large strength of the magnetic coated film and an excellent durability without paying attention to types and particle size of the abrasive to be added to the magnetic recording medium.

Combined use of the polyurethane resin or the polyurethane urea resin with polyurethane resin containing a similar aromatic-base polyester is successful in improving the compatibility of the binder resins, and in consequently ensuring an excellent electromagnetic conversion characteristics and durability.

That is, combined use of the resins individually having no hydrophobic long-chained alkyl groups but having aromatic benzene skeletons instead is advantageous in distinctively improving the compatibility of the binders, and thus in improving the dispersibility of the magnetic coating material and the electromagnetic conversion characteristics. Another advantage is that the surface of the magnetic layer is smoothened, and this improves the durability.

### Example 2

### [Exemplary Synthesis of Polyurethane Resin]

In a reaction vessel equipped with a stirrer, a thermometer and a nitrogen-sealed tube, the glycol components and polar-group-containing diol compounds shown in Tables 9 to 14 below were mixed, and then solubilized by adding MEK (methyl ethyl ketone) so as to adjust the solid content to 60% (wt%). The mixture was then added with 10 ppm of dibutyl tin dilaurylate, and stirred at 70°C. The glycol mixture was further added with MDI so as to attain an R value (OH mol/NCO mol) of 0.95, and the stirring was continued at 70°C for 24 hours. A small amount of polyurethane resin was collected from the reaction mixture, dissolved in THF (tetrahydrofuran) so as to attain a concentration of 0.1 wt%, and polystyrene-equivalent molecular weight was measured by GPC. The reaction was continued while properly adding MDI so as to adjust the number average molecular weight (Mₙ) to 20,000 to 80,000. When a target molecular weight was reached, the reaction mixture was diluted with MEK/TOL (1:1) mixed solution so as to adjust the solid content to 30%, to thereby synthesize the polyurethane resin.

Various types of polyurethane resins were also synthesized by methods similar to a series of those described in the above. Compositions of the individual polyurethane resins were listed in Tables 9 to 14 below. T_{g} of thus-synthesized polyurethane resins was measured by a method described in the next.

### [T_{g} Measurement]

The polyurethane resin solutions (approx. 30 wt% solid content) were coated respectively in a thickness of approx. 30 µm to 50 µm on a surface-lubricated paper, and allowed to dry at 60°C for 1 hour, and further at 120°C for 2 hours, to thereby obtain clear films. Each of the clear films was subjected to T_{g} measurement using a dynamic viscoelastometer (product of ORIENTEC Co., Ltd., trade name: RHEOVIBRON Model Rheo-2000) at a measurement frequency of 35 Hz, and a temperature elevation speed of 2.0°C/min. T_{g} of the magnetic layer was measured by coating the magnetic coating material on a 10-µm-thick PET film in a thickness of 3 µm, allowing it to dry at 60°C for 20 hours, similarly subjecting thus-obtained sample to the measurement, and subtracting a result solely ascribable to the PET film from the result obtained for the sample.

**[Table 9]**

| Polyurethane Resins | | | | | | |
|---|---|---|---|---|---|---|
| Polyurethane | | PU1 | PU2 | PU3 | PU4 | PUS |
| Source glycol | | DMH/EG/Gy | ← | ← | ← | ← |
| Hydroxyl group content (mmol/g) | | 0.1 | 0.4 | 0.5 | 0.75 | 1.0 |
| Polar-group-containing compound | | DEAPD | ← | ← | ← | ← |
| amount of polar group (mmol/g) | | 0.2 | ← | ← | ← | ← |
| Diisocyanate | | MDI | MDI | MDI | MDI | MDI |
| T_{g} (°C) | | 120 | 120 | 120 | 120 | 110 |
| GPC molecular weight | Mn(×10⁴) | 30,000 | 30,000 | 32,000 | 31,000 | 31,000 |
| | Mw(×10⁴) | 60,000 | 60,000 | 64,000 | 62,000 | 62,000 |

**[Table 10]**

| Polyurethane Resins | | | | | | |
|---|---|---|---|---|---|---|
| Polyurethane | | PU6 | PU7 | PU8 | PU9 | PU10 |
| Source glycol | | DMH/EG/Gy | EG/NPG/HG/Gy | DMH/PG/TMP | NPG/BG/HPD A | CHDM/MEA/G y |
| Hydroxyl group content (mmol/g) | | 1.1 | 0.6 | 0.6 | 0.6 | 0.7 |
| Polar-group-containing compound | | DEAPD | SO₃Na | NMDEA | DMPA | SO₃Na |
| amount of polar group (mmol/g) (mmol/g) | | 0.2 | 0.1 | 0.2 | 0.01 | 0.1 |
| Diisocyanate | | MDI | MDI | TDI | TDI | MDI |
| T_{g} (°C) | | 100 | 90 | 120 | 130 | 150 |
| GPC molecular weight | Mn(×10⁴) | 28.000 | 22,000 | 29,000 | 40,000 | 30,000 |
| | Mw(×10⁴) | 56,000 | 44,000 | 58,000 | 30,000 | 60,000 |

**[Table 11]**

| Polyurethane Urea Resins | | | | | | |
|---|---|---|---|---|---|---|
| Polyurethane | | PU11 | PU12 | PU13 | PU14 | PU15 |
| Source glycol | | DMH/EDA/Gy | ← | ← | ← | ← |
| Hydroxyl group content (mmol/g) | | 0.1 0.1 | 0.4 0.4 | 0.5 0.5 | 0.75 0.75 | 1.0 1.0 |
| Polar-group-containing compound | | DEAPD | ← | ← | ← | ← |
| amount of polar group (mmol/g) | | 0.2 | ← | ← | ← | ← |
| Diisocyanate | | TDI | TDI | TDI | TDI | TDI |
| T_{g} (°C) | | 125 | 125 | 125 | 125 | 110 |
| GPC molecular weight | Mn(×10⁴) | 29,000 | 31,000 | 30,000 | 31,000 | 29,000 |
| | Mw(×10⁴) | 58,000 | 62,000 | 60,000 | 62,000 | 58,000 |

**[Table 12]**

| Polyurethane Urea Resins | | | | | | |
|---|---|---|---|---|---|---|
| Polyurethane | | PU16 | PU17 | PU18 | PU19 | PU20 |
| Source glycol | | DMH/EDA/Gy | NPG/HDA/Gy | DMH/DAE/TMP | NPG/EDA/HPDA | CHDM/TMP/Gy |
| Hydroxyl group content (mmol/g) | | 1.1 | 0.6 | 0.6 | 0.6 | 0.7 |
| Polar-group-containing compound | | DEAPD | SO₃Na | NMDEA | DMPA | SO₃Na |
| amount of polar group (mmol/g) | | 0.2 | 0.1 | 0.2 | 0.01 | 0.1 |
| Diisocyanate | | TDI | HDI | MDI | MDI | MDI |
| T_{g} (°C) | | 110 | 60 | 120 | 110 | 140 |
| GPC molecular weight | Mn(×10⁴) | 30,000 | 25,000 | 30,000 | 42,000 | 31,000 |
| | Mw(×10⁴) | 60,000 | 50,000 | 60,000 | 30,000 | 62,000 |

**[Table 13]**

| Polyurethane Urea Resins | | | | | | |
|---|---|---|---|---|---|---|
| Polyurethane | | PU21 | PU22 | PU23 | PU24 | PU25 |
| Source glycol | | BPA/EDA/Gy | H-BPA/EDA/Gy | PES1/NPG/Gy | PES2/NPG/Gy | PES3/NPG/Gy |
| Hydroxyl group content (mmol/g) | | 0.75 | 0.75 | 0.6 | ← | ← |
| Polar-group-containing compound | | DEAPD | ← | DEAPD | ← | ← |
| amount of polar group (mmol/g) | | 0.2 | ← | 0.2 | ← | ← |
| Diisocyanate | | MDI | HDI | MDI | MDI | MDI |
| T_{g} (°C) | | 80 | 70 | 80 | 75 | 60 |
| GPC molecular weight | Mn(×10⁴) | 25,000 | 30,000 | 30,000 | 31,000 | 31,000 |
| | Mw(×10⁴) | 50,000 | 60,000 | 60,000 | 62,000 | 62,000 |

**[Table 14]**

| Polyurethane Urea Resins | | | | | |
|---|---|---|---|---|---|
| Polyurethane | | PU26 | PU27 | PU28 | PU29 |
| Source glycol Source glycol | | PES4/NPG/G y | PES5/NPG/G y | BEHT/NPG/G y | CL-500/NPG/Gy |
| Hydroxyl group content (mmol/g) | | 0.6 | ← | ← | ← |
| Polar-group-containing compound | | DEAPD | ← | ← | ← |
| amount of polar group (mmol/g) | | 0.2 | ← | ← | ← |
| Diisocyanate | | MDI | MDI | MDI | MDI |
| T_{g} (°C) | | 55 | 35 | 95 | -10 |
| GPC molecular weight | Mn(×10⁴) | 30,000 | 31,000 | 31,000 | 30,000 |
| | Mw(×10⁴) | 60,000 | 62,000 | 62,000 | 60,000 |

where in Tables 9 to 14:

| | | | Molecular weight |
|---|---|---|---|
| Glycols | EG | ethylene glycol | 62.07 |
| | PG | 1,3-propylene glycol | 90.12 |
| | BG | 1,4-butanediol | 90.12 |
| | NPG | neopentyl glycol | 104.15 |
| | HG | 1,6-hexanediol | 118.18 |
| | CHDM | 1,4-cyclohexane dimethanol | 114.21 |
| | DMH | dimethylol hexane | 160.26 |
| | Gy | glycerin | 92.09 |
| | TMP | trimethylol propane | 134.17 |
| | MEA | monoethanol amine | 60.08 |
| | BPA | bisphenol-A | 228.29 |
| | H-BPA | hydrogenated bisphenol-A | 240.38; |

| | | | Molecular weight |
|---|---|---|---|
| Diamines | EDA | ethylenediamine | 60.1 |
| | HDA | hyxamethylenediamine | 86.14 |
| | DEA | diethanolamine | 105.14 |
| | HPDEA | hydroxypropyl diethanolamine | 163.22; |

Polar group sources
- DEAPD: diethylamino propanediol
- NMDEA: N-methyldiethanol amine
- DEMPA: dimethanol propionic acid
- SO₃Na: DMIS-containing polyester
(isophthalic acid/NPG/DMIS, molecular weight = 1,000);
Isocyanates
- MDI: 4,4'-diphenylmethane diisocyanate
- TDI: 2,4-toluene diisocyanate
- HDI: hexamethylene diisocyanate; and

- PES1: polyester 1: phthalate of 1,4-BG, Mn = 500
- PES2: polyester 2: phthalate of 1,4-BG, Mn = 1,000
- PES3: polyester 3: phthalate of 1,4-BG, Mn = 1,500
- PES4: polyester 4: phthalate of 1,4-BG, Mn = 2,000
- PES5: polyester 5: phthalate of 1,4-BG, Mn = 2,500
- BEHT: bis(2-hydroxyethyl)terephthalate, Mn = 254.24
- CL-500: ring-opened polymer of ε-caprolactone, average molecular weight = 500.
(Note that Mn represents number average molecular weight.)

Next paragraphs will describe magnetic recording media produced by using these polyurethane resins.

### [Exemplary Preparation of Magnetic Coating Material]

According to the compositions below, magnetic coating materials for forming the magnetic layer were prepared.

### <Magnetic Coating Liquid>

The magnetic coating composition described below was kneaded using a continuous kneader, dispersed using a sand mill, added with 4 parts by weight of polyisocyanate and 1 part by weight of myristic acid, filtered through a filter having an average pore size of 1 µm, to thereby obtain magnetic coating materials.

| | |
|---|---|
| metal magnetic powder (σs = 150 Am²/kg, 56m²/g, Hc = 127 kA/m) | 100 parts by weight |
| polyurethane resin (See Tables 9 to 14 above.) | 10 parts by weight |
| nitrocellulose (product of Asahi Kasei Corporation, trade name: NC-1/2H) | 10 parts by weight |
| carbon black (product of Cabot Corporation; trade name: BP-L) | 2 parts by weight |
| alumina (product of Sumitomo Chemical Co., Ltd.; trade name: HII-60A) | 6 parts by weight |
| butyl stearate | 1 part by weight |
| methylethyl ketone | 80 parts by weight |
| cyclohexanone | 80 parts by weight |
| toluene | 80 parts by weight |

Each of thus-dispersed magnetic coating material was coated on a 10-µm-thick polyethylene terephthalate film by die coating so as to attain a thickness of 3.0 µm. After calendering, the obtained broad film was cured at 60°C for 24 hours, and slit in a width of 1/2 inches, to thereby produce video tapes.

Thus-produced individual video tapes were then subjected to evaluation of dispersibility, magnetostatic characteristics, durability, electromagnetic conversion characteristics, runnability and surface roughness. The durability herein means that evaluated through continuous repetitive use of the virgin portion only.

### [Dispersibility]

The magnetic coating liquid was coated on a polyethylene terephthalate film (14.0-µm thick), dried, and glossiness of the coated surface was measured using a digital variable-angle glossmeter VG-1D, product of Nippon Denshoku Industries, Co., Ltd., at an incident angle of 45°. Glossiness of the individual tapes were expressed based on the evaluation criteria listed below:
O glossiness > 180%;
Δ: 180% > glossiness ≥ 150%; and
×: glossiness < 150%.

### [Magnetostatic Characteristics]

Magnetostatic characteristics of the obtained tapes were measured using super-high-sensitivity, vibration sample magnetometer (VSM-P10-15auto) dedicated for room temperature use, product of Toei Industry Co., Ltd., under conditions of 20°C, 50% RH.

### [Durability]

Using HDCAM VTR (product of SONY corporation, trade name: HDW-2000), 125 cassettes of 120-minute virgin tape were recorded/reproduced continuously for 500 hours under conditions of 40°C and 80%RH, and variations in the output were measured. Those showing no variation in the output were further evaluated for the powder drop by microscopically observing the surface of the head.
ⓞ: no variation in the output, less powder adhesion on the head;
○: no variation in the output, much powder adhesion on the head;
Δ: output variation within ±2.0 dB; and
×: clogging of the head, no output producible.

### [Electromagnetic Conversion Characteristics]

Using digital HDCAM VTR (product of SONY Corporation, trade name: HDW-500), electromagnetic conversion characteristics were measured at a measurement frequency of 32 MHz, where difference from Comparative Example 11 was determined while assuming the output of Comparative Example 11 as 0 dB.

### [Runnability]

Using HDCAM VTR (product of SONY Corporation, trade name: HDR-500), each tape for 120-minute use were continuously run 200 times under a condition of 20°C, 50%RH.
○: running completed;
Δ: running destabilized due to increased friction; and
×: sticking occurred due to increased friction.

Results of the individual evaluation subjects were shown in Tables 15 to 20.

**[Table 15]**

| Characteristics Evaluation of Magnetic Recording Media | | | | | |
|---|---|---|---|---|---|
| | Experiment 1 | Experiment 2 | Experiment 3 | Experiment 4 | Experiment 5 |
| Polyurethane resin | PU1 | PU2 | PU3 | PU4 | PU5 |
| T_{g} of magnetic layer (° C) | 100 | 100 | 100 | 100 | 100 |
| Glossiness | ○ | ○ | ○ | ○ | Δ |
| Magnetostatic characteristics Rₛ (%) | 86.0 | 85.0 | 84.9 | 84.5 | 84.0 |
| Durability | ○ | ○ | ⓞ | ⓞ | ⓞ |
| Electric characteristics QF (dB) | 2.0 | 1.9 | 1.9 | 1.9 | 1.8 |
| Runnability | ○ | ○ | ○ | ○ | ○ |

**[Table 16]**

| Characteristics Evaluation of Magnetic Recording Media | | | | | |
|---|---|---|---|---|---|
| | Experiment 6 | Experiment 7 | Experiment 8 | Experiment 9 | Experiment 10 |
| Polyurethane resin | PU6 | PU7 | PU8 | PU9 | PU10 |
| T_{g} of magnetic layer (°C) | 80 | 70 | 100 | 105 | 110 |
| Glossiness | ○ | ○ | ○ | ○ | ○ |
| Magnetostatic characteristics Rₛ (%) | 81.0 | 84.3 | 83.3 | 84.1 | 83.8 |
| Durability | ⓞ | ⓞ | ⓞ | ⓞ | ⓞ |
| Electric characteristics QF (dB) | 0.5 | 1.9 | 2.0 | 1.8 | 2.0 |
| Runnability | ○ | ○ | ○ | ○ | ○ |

**[Table 17]**

| Characteristics Evaluation of Magnetic Recording Media | | | | | |
|---|---|---|---|---|---|
| | Experiment 11 | Experiment 12 | Experiment 13 | Experiment 14 | Experiment 15 |
| Polyurethane resin | PU11 | PU12 | PU13 | PU14 | PU15 |
| T_{g} of magnetic layer (° C) | 100 | 100 | 100 | 100 | 95 |
| Glossiness | ○ | ○ | ○ | ○ | ○ |
| Magnetostatic characteristics Rₛ (%) | 84.1 | 84.4 | 84.6 | 85.1 | 83.2 |
| Durability | ○ | ○ | ⓞ | ⓞ | ⓞ |
| Electric characteristics QF (dB) | 2.0 | 1.9 | 2.0 | 2.0 | 1.9 |
| Runnability | ○ | ○ | ○ | ○ | ○ |

**[Table 18]**

| Characteristics Evaluation of Magnetic Recording Media | | | | | |
|---|---|---|---|---|---|
| | Experiment 16 | Experiment 17 | Experiment 18 | Experiment 19 | Experiment 20 |
| Polyurethane resin | PU16 | PU17 | PU18 | PU19 | PU20 |
| T_{g} of magnetic layer (°C) | 90 | 60 | 100 | 105 | 110 |
| Glossiness | ○ | ○ | ○ | ○ | ○ |
| Magnetostatic characteristics Rₛ (%) | 80.1 | 83.8 | 83.5 | 83.3 | 85.6 |
| Durability | ⓞ | ⓞ | ⓞ | ⓞ | ⓞ |
| Electric characteristics QF (dB) | 0.6 | 1.9 | 2.0 | 1.8 | 2.0 |
| Runnability | ○ | ○ | ○ | ○ | ○ |

**[Table 19]**

| Characteristics Evaluation of Magnetic Recording Media | | | | | |
|---|---|---|---|---|---|
| | Experiment 21 | Experiment 22 | Experiment 23 | Experiment 24 | Experiment 25 |
| Polyurethane resin | PU21 | PU22 | PU23 | PU24 | PU25 |
| T_{g} of magnetic layer (°C) | 100 | 80 | 85 | 80 | 65 |
| Glossiness | ○ | ○ | ○ | ○ | ○ |
| Magnetostatic characteristics Rₛ (%) | 84.4 | 82.3 | 84.3 | 84.2 | 84.6 |
| Durability | ⓞ | ⓞ | ⓞ | ⓞ | ⓞ |
| Electric characteristics QF (dB) | 1.8 | 1.6 | 2.0 | 1.9 | 2.1 |
| Runnability | ○ | ○ | ○ | ○ | ○ |

**[Table 20]**

| Characteristics Evaluation of Magnetic Recording Media | | | | | | |
|---|---|---|---|---|---|---|
| | Experiment 26 | Experiment 27 | Experiment 28 | Experiment 29 | Comparative Example 10 | Comparative Example 11 |
| Polyurethane resin | PU26 | PU27 | PU28 | PU29 | MR-100 | UR-8200 |
| T_{g} of magnetic layer ( ° C ) | 55 | 55 | 95 | - | 40 | 40 |
| Glossiness | ○ | ○ | ○ | × | ○ | Δ |
| Magnetostatic characteristics Rₛ (%) | 85.0 | 85.3 | 85.1 | 72.1 | 85.3 | 82.1 |
| Durability | ⓞ | ○ | ⓞ | × | Δ | × |
| Electric characteristics QF (dB) | 2.1 | 2.2 | 1.9 | -3.0 | 1.6 | 0.0 |
| Runnability | ○ | ○ | ○ | Δ | ○ | Δ |

where in Table 20:
MR-100 is a vinyl chloride resin produced by ZEON Corporation; and
UR-8200 is a polyurethane resin (hydroxyl group content s 0.1 mmol/g) produced by Toyobo Co., Ltd.
T_{g} was not measurable for Experiment 29.

It is known from Tables 15 to 20 that Comparative Example 10, using a most popular vinyl-chloride-base resin, showed desirable electromagnetic conversion characteristics but only a poor durability. Comparative Example 11 using the conventional urethane resin was found to be unsatisfactory in all items of dispersibility, durability and runnability.

Experimental Cases 1, 2, 11 and 12, having less contents of hydroxyl group, showed desirable electromagnetic conversion characteristics, but comparison with Experimental Case 3 revealed that the durability could further be raised by adjusting the amount of hydroxyl group within a specific range (0.5 to 1.0 mmol/g) defined in the present invention. On the contrary, Experimental Cases 6 and 16, having larger contents of hydroxyl group, showed degraded dispersibility of the magnetic coating material due to increased viscosity, and consequently showed extremely degraded electromagnetic conversion characteristics.

Experimental Cases 20 to 28 represent the cases where polyester polyol was used. It was suggested that use of polyester polyol having an average molecular weight of 2,000 or above lowered T_{g} of the resin and magnetic coated film due to decrease in the urethane group concentration in the urethanized resin, and thus ruined the durability. It is thus preferable in the magnetic recording medium of the present invention that molecular weight of polyester polyol is defined as 2,000 or below.

Experimental Case 29, using polyether diol having a molecular weight larger than that specified in the present invention, failed in measuring a sharp T_{g}, showing only a broad peak, since the polyether diol has only a poor compatibility with nitrocellulose used in combination therewith and cannot thoroughly be mixed.
The dispersibility and durability were also found to be unsatisfactory.

As is obvious from the above, because the binder contains the polyurethane resin having a large amount of active hydroxyl groups introduced therein, the magnetic coated film is successfully improved in the strength and durability without selecting or adjusting types and particle size of the abrasive to be added to the magnetic recording media.

That is, because the content of the hydroxyl group is specified as 0.5 to 1.0 mmol/g, and because the binder is defined to contain the polyurethane resin having a large amount of hydroxyl groups introduced therein, the electromagnetic conversion characteristics and durability of the magnetic recording medium can successfully be improved, and this contributes to provision of a magnetic recording medium well adaptable to high-density recording and digital recording.

Although the invention has been described in its preferred form with a certain degree of particularity, obviously many changes and variations are possible therein. It is therefore to be understood that the present invention may be practiced otherwise than as specifically described herein without departing from the scope and the sprit thereof.

## Claims

1. A magnetic recording medium obtained by coating, on a non-magnetic support, a magnetic coating material having a magnetic powder and a binder dispersed in a solvent, wherein said binder contains two kinds of polyurethane resins such as:
an aromatic polyester polyurethane resin obtained by urethanization of an aromatic polyester with an aromatic diisocyanate; and
a polyurethane resin obtained by urethanization of a glycol having a molecular weight of 60 to 250 with an aromatic diisocyanate under a condition ensuring a urethane group concentration of 3.0 mmol/g or above.

2. The magnetic recording medium as claimed in Claim 1, wherein said aromatic polyester polyurethane resin has an OH value of 10 to 500 KOH mg/g.

3. The magnetic recording medium as claimed in Claim 1, wherein said aromatic polyester polyurethane resin and said polyurethane resin contain any one of metal sulfonate, tertiary amine or quaternary ammonium salt.

4. The magnetic recording medium as claimed in Claim 1, wherein said binder contains an aromatic isocyanate hardener.

5. A magnetic recording medium obtained by coating, on a non-magnetic support, a magnetic coating material having a magnetic powder and a binder dispersed in a solvent, wherein said binder contains two kinds of polyurethane resins such as:
an aromatic polyester polyurethane resin obtained by urethanization of an aromatic polyester with an aromatic diisocyanate; and
a polyurethane urea resin obtained by urethanization of a glycol having a molecular weight of 60 to 250, amino alcohol and diamine with an aromatic diisocyanate under a condition ensuring a total concentration of urethane group and urea group of 3.0 mmol/g or above.

6. The magnetic recording medium as claimed in Claim 5, wherein said aromatic polyester polyurethane resin has an OH value of 10 to 500 KOH mg/g.

7. The magnetic recording medium as claimed in Claim 5, wherein said aromatic polyester polyurethane resin and said polyurethane resin contain any one of metal sulfonate, tertiary amine or quaternary ammonium salt.

8. The magnetic recording medium as claimed in Claim 5, wherein said binder contains an aromatic isocyanate hardener.

9. A magnetic recording medium obtained by coating, on a non-magnetic support, a magnetic coating material having a magnetic powder and a binder dispersed in a solvent, wherein said binder contains a polyurethane resin which comprises water, glycol or triol having a molecular weight of 60 to 250, diamine, amino alcohol and diisocyanate, and has an OH value of 0.5 to 1.0 mmol/g.

10. The magnetic recording medium as claimed in Claim 9, wherein said polyurethane resin contains a low-molecular-weight polyester having a number-average molecular weight of 2,000 or below.
